# FASCICULE DE BREVET EUROPEEN

(11) **EP 0 472 479 B1**
(45) Date de publication et mention de la délivrance du brevet: **28.12.1994**
(21) Numéro de dépôt: 91420290.8
(22) Date de dépôt: 08.08.1991
(51) Int. Cl.: B05B 17/06

(54) **Dispositif ultrasonique pour la production en continu de particules**
Ultraschallgerät zur kontinuierlichen herstellung von Teilchen
Ultrasonic device for the continuous production of particulates

(30) Priorité: 20.08.1990 FR 9010608
(43) Date de publication de la demande: 26.02.1992
(73) Titulaire: I.P.S. Industrie des Poudres Sphériques S.A., F-74100 Annemasse (FR)
(72) Inventeur: Bechet, Louis, F-74140 Sciez (FR)
(74) Mandataire: Moinas, Michel

(56) Documents cités:
- EP-A- 0 011 269
- EP-A- 0 202 381
- EP-A- 0 308 933
- DE-A- 2 537 772
- DE-A- 3 036 721

## Description

La présente invention est relative à un dispositif ultrasonique pour la production en continu de particules ayant une granulométrie aussi homogène que possible, et plus particulièrement de micro-gouttelettes de diamètre et de sphéricité contrôlés.

Le problème de la production de micro-gouttelettes finement divisées se rencontre dans de nombreux domaines où il est nécessaire de pulvériser ou d'atomiser des liquides organiques et/ou minéraux, par exemple dans le domaine pharmaceutique pour délivrer un produit en suspension, médicament ou autre, au moyen d'un aérosol, ou enrobé dans une matrice (médicament-retard). Dans le même ordre d'idées, on citera le domaine des cosmétiques, par exemple peur produire ce qu'il est convenu maintenant d'appeler des liposomes.

Pour ce, on connait des dipositifs ultrasoniques, tel que ceux divulgués dans les exposés DE-A-2 537 772 ou DE-A-3 036 721, lesquels décrivent respectivement des dispositifs présentant les caractéristiques mentionnées en préambule de la revendication 1, pour la production en continu de micro-gouttelettes spécifiquement à partir de liquide, ces dispositifs comprenant une surface vibrante atomisant de par leur régime vibratoire ultrasonique orthogonal le liquide amené depuis l'intérieur. Toutefois, de par la configuration des moyens d'amenée du liquide dans ces dispositifs cités, ceux-ci ne fonctionnent que si le liquide ne présente pas une viscosité trop importante. De plus, le débit du liquide délivré peut être assez irrégulier et la distribution peut se faire en une nappe d'épaisseur plus ou moins constante.

On connait d'autre part des carburateurs de moteurs thermiques ou des injecteurs de chaudières, tel que celui décrit dans le document EP-A-0202381, fonctionnant par ultrasons pour pulvériser un combustible liquide. A nouveau, compte-tenu des très faibles sections de passage impliquées, ces pulvérisateurs ne peuvent fonctionner correctement qu'avec des essences volatiles.

Or, de nombreuses pièces sont réalisées actuellement à partir de poudres ou de granules métalliques de petites dimensions, notamment lors d'opérations de frittage. Le problème de la répartition granulométrique se révèle important car il est souhaitable de produire des lots de micro-billes toutes sensiblement de la même dimension.

Dans la technologie des métaux fondus, on connait un dispositif ultrasonique qui permet d'obtenir des micro-billes ayant un diamètre de l'ordre de 5 à 200 microns. On fait tomber goutte-à-goutte un matériau à l'état liquide sur la surface d'extrémité d'un vibrateur oscillant à une fréquence comprise entre 5 et 50 kilohertz. Un vibrateur ultrasonique comprend, par exemple, un transducteur piézo-électrique prolongé par un concentrateur, c'est-à-dire une pièce dont la forme particulière permet une résonance sur sa surface d'extrémité d'un ordre de grandeur supérieur à l'oscillation du transducteur. Un tel dispositif vibrateur est également appelé "sonotrode" dans l'industrie. De préférence, ce procédé est effectué dans une enceinte permettant de contrôler l'atmosphère, soit sous vide, soit sous gaz inerte.

Lorsqu'une goutte liquide tombe sur la surface vibrante ultrasonique, on observe sur celle-ci la formation d'une nappe dont la surface supérieure prend la forme d'un réseau d'ondes stationnaires de longueur d'onde de l'ordre de 200 microns par exemple. Quand l'amplitude de ces ondes atteint une valeur suffisante, des gouttes de liquide se détachent du sommet de ces ondes puis, en se refroidissant, forment des micro-billes solides de diamètre de l'ordre de 50 microns. On constate que le diamètre des micro-billes ainsi obtenu dépend pour une grande part de la fréquence de la vibration de la surface. La répartition des diamètres autour d'une valeur moyenne dépend en partie de l'amplitude de la vibration, mais plutôt des caractéristiques rhéologiques du matériau qui varient notablement entre un liquide et un matériau fondu. Le taux de production horaire de micro-particules dépend lui essentiellement de l'amplitude de la vibration et du coefficient de viscosité dynamique du matériau.

Le dispositif ultrasonique décrit précédemment présente toutefois des effets parasites dûs à la configuration et à l'agencement des éléments induisant une dispersion des diamètres encore insatisfaisante car nécessitant par la suite un calibrage des micro-billes par passage dans une série de tamis. On a d'une part constaté que le réseau d'ondes de la nappe liquide est instable sur la surface vibrante et d'autre part que l'épaisseur de cette nappe était variable, épaisse proche du lieu où arrive le matériau et trop fine vers les bords de la surface.

Le but de la présente invention est d'obvier les inconvénients précités dûs en grande partie au débit et à la distribution trop irréguliers du liquide sur la surface vibrante, et ce afin de produire des micro-gouttelettes de diamètre plus contrôlé avec un rendement de production amélioré.

Ces buts sont atteints grâce à un dispositif ultrasonique comprenant une surface vibrante atomisant de par son régime vibratoire ultrasonique orthogonal un matériau à l'état liquide amené depuis l'intérieur du dispositif par des moyens d'amenée, caractérisé en ce que le matériau à l'état liquide est distribué à la surface vibrante par un canal annulaire ou plusieurs canaux dont l'une des dimensions de la section de passage est de l'ordre du millimètre ou submillimétrique, soit à partir d'une chambre intermédiaire-creuset de régulation de débit et/ou de régulation thermique, soit directement à partir dudit canal annulaire faisant office de chambre intermédiaire-creuset, ladite chambre intermédiaire étant sous-jacente à la surface vibrante, ainsi qu'à un procédé pour sa mise en oeuvre. Avantageusement, les moyens d'amenée comprennent un ou plusieurs conduits d'amenée du matériau à l'état liquide ; et la base de ladite chambre intermédiaire, où débouchent le ou lesdits conduits d'amenée se situe dans le plan d'un noeud d'onde du régime vibratoire.

Utilement, le matériau à l'état liquide est distribué à la surface vibrante par un ou plusieurs canaux dont la section totale de passage est supérieure à 8 mm2, l'écoulement du matériau s'effectuant par capillarité et/ou gradient de pression induit par le mode vibratoire.

Par "matériau à l'état liquide", on entend désigner aussi bien un liquide proprement dit aux températures ambiantes qu'un matériau fondu, c'est-à-dire solide à ces températures et rendu liquide pour la circonstance. Ce matériau peut être minéral et/ou organique. Grâce à la présence de la chambre intermédiaire, il devient possible d'une part de contrôler la viscosité du liquide au niveau de la surface vibrante en jouent sur sa température, et d'autre part de mieux maîtriser les pertes de charge par la réalisation plus précise de canaux d'éjections maintenant plus courts. Ainsi, un matériau initialement solide peut être maintenu à l'état liquide ou liquéfié par chauffage dans la chambre intermédiaire faisant office de creuset très proche de la surface vibrante.

Selon un premier mode de réalisation préféré, la chambre intermédiaire interne est cylindrique et parallèle à la surface vibrante. Alors, le matériau à l'état liquide est distribué par plusieurs canaux situés à intervalles réguliers sur la ligne de la chambre la plus proche de la surface.

Selon un second mode de réalisation préféré, la chambre intermédiaire interne est centrale et a une forme tubulaire orthogonale à la surface vibrante dans laquelle elle débouche directement par l'une de ses extrémités, si désiré rétrécie.

Selon un troisième mode de réalisation préféré, la chambre intermédiaire interne tubulaire est située sur le pourtour du dispositif vibrant, sous-jacente et orthogonale à la surface vibrante de forme convexe, A la périphérie de laquelle elle débouche.

Avantageusement, la surface vibrante présente une suite de rainures parallèles ou en damier, ou un réseau de rainures circulaires et/ou radiales qui tendent à stabiliser en position le régime ondulatoire de la nappe. Les rainures peuvent présenter une section transversale rectangulaire, trapézoïdale, en forme de U, etc...

Afin d'améliorer l'épandage du matériau à l'état liquide sur la surface vibrante, les canaux peuvent déboucher avec un angle compris entre 25 et 60 degrés par rapport à la surface. En alternative, une coiffe parallèle à la surface est disposée au-dessus et proche de la sortie du ou des canaux.

L'invention est décrite ci-après de façon plus détaillée à l'aide d'exemples d'exécution sans caractère limitatif illustrés aux dessins annexés dans lesquels :
- la figure 1 est une vue en perspective partiellement éclatée d'un premier mode de réalisation du dispositif ultrasonique,
- la figure 2 est une vue en perspective partiellement éclatée d'un second mode de réalisation du dispositif ultrasonique,
- la figure 3 est une vue en perspective partiellement éclatée d'un troisième mode de réalisation du dispositif ultrasonique.

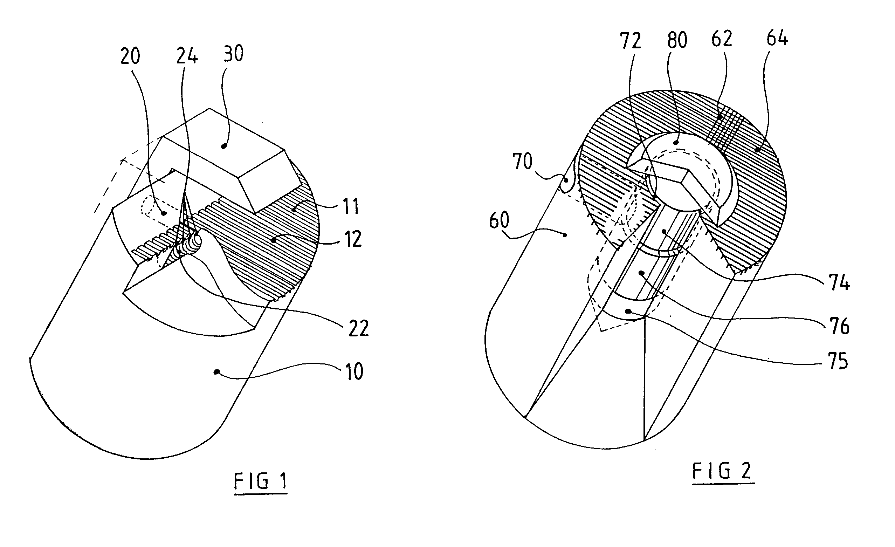

Sur la figure 1 est illustrée l'extrémité d'un élément vibrant 10, en l'occurrence du concentrateur d'une sonotrode, se terminant par une surface vibrante faisant atomiseur 11. Dans la coupe partielle de l'élément vibrant 10, on peut observer une chambre intermédiaire interne 22, utilisée en tant que creuset interne, sensiblement cylindrique dont la longueur est parallèle à la surface atomiseur 11. Cette chambre intermédiaire interne 22 est alimentée en matière à l'état liquide, par exemple en fusion, par un canal d'amenée 20. L'élément vibrant 10 étant chauffé, le matériau en fusion est maintenu en température également à l'intérieur de la chambre intermédiaire 22. Une suite de canaux d'éjections 24, par exemple de l'ordre de 15, relie cette chambre intermédiaire 22 à la surface atomiseur 11. De préférence, ces canaux d'éjection 24 sont disposés à intervalles réguliers le long de la ligne de la chambre intermédiaire la plus proche de la surface. Le diamètre de chacun de ces canaux est de l'ordre du millimètre.

Le mode vibratoire de la sonotrode induit dans ces canaux 24 une différence de pression avec l'extérieur provoquant la sortie du matériau en fusion hors de ces canaux. Compte-tenu de la faible section de passage de chacun de ces canaux, le débit de sortie du matériau en fusion est influencé par des effets de capillarité, eux-mêmes dépendants d'une part de la forme ultime et de la qualité de l'usinage des canaux, et d'autre part des caractéristiques rhéologiques du matériau en fusion dépendant ellesmêmes de la valeur de la température finale du matériau.

Comme on peut bien l'observer sur la figure 1, la surface atomiseur 11 comporte une série de stries ou rainures parallèles et régulières de largeur de l'ordre du millimètre, de profondeur d'environ 0,25 millimètre pour un pas de l'ordre de 2 millimètres. Les canaux d'éjection 24 débouchent respectivement au fond d'une rainure ainsi constituée. L'objet de ces rainures est de stabiliser en position latérale la nappe de matériau épandu.

Afin de limiter des projections de matériau hors de la surface vibrante 11 dès la sortie des canaux, on dispose sur l'élément vibrant 10 un sabot dont l'extrémité constitue une coiffe 30 parallèle à la surface atomiseur 11, laquelle coiffe arrive audessus des canaux d'éjection 24. La forme, les dimensions et le poids de ce sabot et coiffe 30 sont bien évidemment dimensionnés pour éviter une modification trop sensible du régime vibratoire de l'élément vibrant 10, notamment du concentrateur.

En alternative, on peut remplacer l'effet de la coiffe 30 par des embouchures de canaux d'éjection 24 obliques, c'est-à-dire débouchant sur la surface vibrante 11 avec un angle compris entre 15 et 75 degrés par rapport à cette surface. Toutefois, la réalisation pratique de tels canaux coudés est plus difficile et peut de plus créer des pertes de charge au sein de ces canaux.

Comme on peut s'en rendre compte, le débit de matériau en fusion sur la surface atomiseur 11 est établi d'une part par la section de passage de chacun des canaux 24 et d'autre part par le nombre de ces canaux.

Sur la figure 2 est illustrée une seconde variante de l'extrémité de la sonotrode dans laquelle les pièces principales sont coaxiales à l'élément vibrant 60 cylindrique. Pour ce, on effectue d'abord le perçage d'un trou borgne 75 au milieu de l'élément vibrant 60. On insère en force dans ce trou borgne une pièce 76 dont la partie inférieure a un diamètre correspondant à celui du trou borgne 75 et dont la partie supérieure présente une restriction 74.

Avantageusement, la base de la pièce 76 se situe dans un plan de noeud d'onde, c'est-à-dire à une hauteur de la sonotrode où l'amplitude des vibrations est minimum, limitant ainsi volontairement la mise en résonance plus ou moins contrôlée de cette pièce 76.

La restriction 74 crée, avec la partie supérieure du trou borgne 75, un canal 72 de forme cylindrique allongée, en d'autres termes annulaire ou torique, débouchant directement sur la surface supérieure atomiseur 61. Ce canal annulaire ou torique fait ici à la fois office de chambre interne-creuset et de canal d'éjection. Si le volume de cette chambre interne doit être supérieur pour des raisons de régulation de débit par effet tampon, alors, la restriction 74 est réduite dans sa partie supérieure pour constituer un canal d'éjection rétréci.

Un canal d'amenée 70 transversal intersecte le canal 72. Ce canal d'amenée 70 peut déboucher dans le trou borgne 75 à n'importe quelle hauteur, mais de préférence au fond, soit au niveau du plan de noeud d'onde.

Comme on peut le constater sur la figure 2, la surface supérieure atomiseur 61 présente également une suite de rainures parallèles 64 de dimensions sensiblement identiques aux rainures décrites sur la figure 1. Il peut s'avérer utile de stabiliser la nappe de matériau en fusion dans les deux axes du plan de la surface 61, ce que l'on effectue par la taille de rainures complémentaires transversales 62.

Par ailleurs, la pièce 76 est complétée, en son extrémité extérieure, par une coiffe 80 débordant au-delà de la sortie du canal 72. Comme précédemment, cette coiffe 80 a pour fonction de rabattre vers la surface atomiseur 61 le matériau en fusion éjecté. En alternative, le trou borgne 75 pourrait présenter une embouchure conique au niveau de la surface 61 et ce d'un angle au sommet pouvant varier entre 30 et 150 degrés. Alors, la pièce 76 présente, au lieu d'une coiffe 80, un élargissement conique d'angle correspondant.

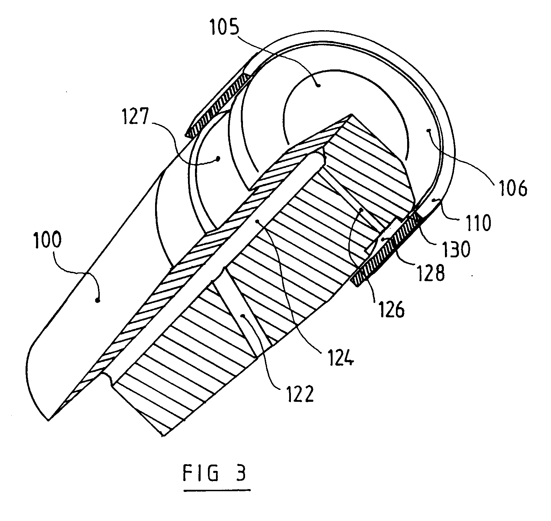

Sur la figure 3 est illustrée une troisième variante de l'extrémité de la sonotrode comprenant un élément vibrant 100 cylindrique, voire tronconique vers le bas, et présentant dans la partie supérieure, sous-jacente à la surface vibrante 105, une rainure périphérique 127 constituant, en combinaison avec une collerette 110 rapportée, une chambre intermédiaire 128. Le diamètre interne de la collerette 110 est supérieur au diamètre externe de l'élément vibrant d'un à deux millimètres. De préférence, cette collerette 110 est fixée à l'élément vibrant 100 au niveau d'un plan de noeud d'onde pour limiter d'éventuelles vibrations à la manière d'une cloche.

Le matériau peut être amené jusqu'à la chambre intermédiaire 128, de préférence proche du noeud d'onde, c'est-à-dire à la base de la chambre par des canaux internes 122, 124 et 126, voire par un canal externe. Pour des considérations d'usinage, le canal central 124 peut être percé à partir de la face inférieure, et l'orifice d'entrée est par la suite refermé.

Un canal d'éjection 130 est formé à la périphérie de la surface vibrante 105 de par la faible différence entre le diamètre externe de l'élément vibrant 100 et le diamètre interne de la collerette 110. Comme on peut l'observer sur la figure 3, la surface vibrante 105 est légèrement convexe, et présente notamment un arrondi au niveau de la sortie du canal d'éjection 130. Cet arrondi évite toute rupture du film de matériau liquide progressant hors du canal radialement vers le centre de la surface. Si nécessaire, le bord supérieur de la collerette 100 peut aussi être légèrement replié radialement vers l'intérieur pour accompagner le mouvement du matériau liquide sur le pourtour de la surface vibrante.

La partie externe 106 de la surface vibrante 105 présente aussi une certaine inclinaison, de l'ordre de 10 à 20 degrés, par rapport à l'horizontale, à la fois pour adoucir l'arrondi à la sortie du canal d'éjection, et aussi pour orienter la majorité des micro-gouttelettes se formant à ce niveau vers l'extérieur du dispositif. Cette zone periphérique 106 s'avérant être la plus importante au point de vue de la formation de microgouttellettes, il peut être avantageux de tailler dans cette zone une trame de rainures radiales et circulaires de régulation de la répartition du matériau liquide.

Comme on peut aisément le comprendre, on installe la sonotrode avec sa surface vibrante selon l'invention, dans une enceinte close permettant de contrôler le milieu environnant, c'est-à-dire travailler sous vide ou sous gaz inerte.

Avantageusement, l'élément vibrant 10 de la figure 1 est orienté d'un angle de 45 degrés vers le haut avec le canal d'amenée 20 également orienté vers le haut. On peut ainsi faire descendre par en haut un fil ou une lame liquide ou une tige de métal préchauffée dans le canal 20, ce métal fondant alors dans la chambre intermédiaire interne 22. En alternative, on chauffe le métal préalablement dans un creuset principal que l'on amène alors à l'état de fusion dans le canal d'entrée 20. On constate que les rainures 12 assurent une stabilisation latérale de la nappe et, dans une certaine mesure, un appel de matériau venant des canaux.

L'élément vibrant 60 selon la figure 2, ou l'élément 100 selon la figure 3, peut être installé dans l'enceinte avec un angle compris entre 0 et 180 degrés par rapport à l'horizontale. Même lorsque l'élément est installé avec un angle supérieur à 90_{°}, la nappe reste toujours sur la suface vibrante 61 par effet de tension superficielle. Ce phénomène se vérifie encore lorsque la surface vibrante est dirigée vers le bas. Les micro-gouttelettes détachées sont projetées et tombent directement par gravité vers le bas en se refroidissant et en formant des micro-billes.

Si nécessaire, notamment pour atteindre des fréquences de vibrations plus importantes, donc des diamètres de micro-billes plus petites, l'élément vibrant peut également être constitué par une lame vibrante la chambre intermédiaire avec ses canaux d'éjection étant alors aménagés dans la lame sous la surface supérieure.

L'invention s'applique dans les nombreux domaines où il est souhaitable de fabriquer en continu des particules de granulométrie aussi homogène que possible et on rappellera utilement ceux qui ont été cités plus haut, à savoir métaux fondus, mais aussi pharmacie, cosmétique et moteurs thermiques.

## Revendications

1. Dispositif ultrasonique pour la production en continu de micro-gouttelettes ayant une granulométrie homogène, comprenant une surface vibrante (11,61,105) atomisant de par son régime vibratoire ultrasonique orthogonal un matériau à l'état liquide amené depuis l'intérieur du dispositif par des moyens d'amenée (20,22,24; 70,72; 122,124,126,128,130), caractérisé en ce que le matériau à l'état liquide est distribué à la surface vibrante (11,61,105) par un canal annulaire (72,130) ou plusieurs canaux (24) dont l'une des dimensions de la section de passage est de l'ordre du millimètre ou submillimétrique, soit à partir d'une chambre intermédiaire-creuset (22,128) de régulation de débit et/ou de régulation thermique, soit directement à partir dudit canal annulaire (72) faisant office de chambre intermédiaire-creuset, ladite chambre intermédiaire (22,72,128) étant sous-jacente à la surface vibrante (11,61,105).

2. Dispositif ultrasonique selon la revendication 1, caractérisé en ce que lesdits moyens d'amenée comprennent un ou plusieurs conduits d'amenée (20,70,126) du matériau à l'état liquide, la base de ladite chambre intermédiaire (22, 72,128), où débouchent le ou lesdits conduits d'amenée (20,76,126) se situant dans le plan d'un noeud d'onde du régime vibratoire.

3. Dispositif ultrasonique selon la revendication 1 ou 2, caractérisé en ce que la section totale de passage du ou des canaux (72,130,24) est supérieure à 8 mm2, l'écoulement du matériau s'effectuant par capillarité et/ou gradient de pression induit par le mode vibratoire.

4. Dispositif ultrasonique selon l'une des revendications précédentes, caractérisé en ce que les canaux débouchent sur la surface vibrante (11) avec un angle compris entre 25 et 75 degrés par rapport à la surface.

5. Dispositif ultrasonique selon l'une des revendications 1 à 4, caractérisé en ce que la chambre intermédiaire interne (22) est cylindrique et parallèle à la surface vibrante (11), et en ce que le matériau à l'état liquide est distribué par plusieurs canaux (24) situés à intervalles réguliers sur la ligne de la chambre la plus proche de la surface (11).

6. Dispositif ultrasonique selon l'une des revendications 1 à 4, caractérisé en ce que la chambre intermédiaire interne (72) est centrale, et a une forme tubulaire orthogonale à la surface vibrante (11) dans laquelle elle débouche directement par l'une de ses extrémités, si désiré rétrécie.

7. Dispositif ultrasonique selon l'une des revendications 1 à 4, caractérisé en ce que la chambre intermédiaire interne (128) tubulaire est située sur le pourtour du dispositif vibrant (100), sous-jacente et orthogonale à la surface vibrante (105), de forme convexe parrapport audit dispositif vibrant, à la périphérie de laquelle elle débouche.

8. Dispositif ultrasonique selon l'une des revendications précédentes, caractérisé en ce que la surface vibrante (11) présente un réseau de rainures rectilignes parallèles (12) ou en damier, ou un réseau de rainures circulaires et/ou radiales.

9. Dispositif ultrasonique selon la revendication 8, caractérisé en ce que les rainures présentent une section transversale rectangulaire.

10. Procédé de fabrication de micro-billes à partir de matériau thermofusible selon lequel on introduit le matériau dans la chambre intermédiaire-creuset d'un dispositif ultrasonique selon l'une des revendications 1 à 8 de façon à ce que ledit matériau soit amené à l'état de fusion, les micro-gouttelettes produites par le dispositif et détachées de la surface vibrante tombant par gravité en se refroidissant et en formant lesdites micro-billes.

## Claims

1. An ultrasonic device for the continuous production of microdroplets having a uniform particle size distribution, comprising a vibrating surface (11,61,105) which by its orthogonal ultrasonic vibratory mode atomizes a material in the liquid state brought up from the interior of the device by a means of delivery (20,22,24; 70,72; 122,124,126,128,130) characterized in that the material in the liquid state is distributed over the vibrating surface (11,61,105) by an annular channel (72,130) or several channels (24) of which one of the dimensions of the flow cross section is of the order of a millimetre or is submillimetric, either from an intermediate flow-regulating and/or heat regulating chamber/crucible (22,128) or directly from the said annular channel (72) serving as an intermediate chamber/crucible, the said intermediate chamber (22,72,128) being subjacent to the vibrating surface (11,61,105).

2. Ultrasonic device according to claim 1, characterized in that the said means of delivery comprises one or more conduits (20,70,126) for delivering the material in the liquid state, the base of the said intermediate chamber (22,72,128) where the said delivery conduit or conduits emerge (20,76,126) being situated in the plane of a wave node of the vibratory mode.

3. Ultrasonic device according to claims 1 or 2, characterized in that the total cross flow section of the channel or channels (72,130,24) is greater than 8 mm², the flow of the material taking place by capillarity and/or by the pressure gradient induced by the vibratory mode.

4. Ultrasonic device according to one of the preceding claims, characterized in that the channels open out onto the vibrating surface (11) at an angle of between 25 and 75 degrees to the surface.

5. Ultrasonic device according to one of claims 1 to 4, characterized in that the internal intermediate chamber (22) is cylindrical and parallel to the vibrating surface (11) and in that the material in the liquid state is distributed through several channels (24) situated at regular intervals along the line of the chamber nearest to the surface (11).

6. Ultrasonic device according to one of claims 1 to 4, characterized in that the internal intermediate chamber (72) is central and has a tubular shape orthogonal to the vibrating surface (11) on which it opens directly at one of its ends which may be tapered if so desired.

7. Ultrasonic device according to one of claims 1 to 4, characterized in that the tubular internal intermediate chamber (128) is situated at the periphery of the vibrating device (100), subjacent and orthogonal to the vibrating surface (105), having a convex shape with respect to the said vibrating device, at the periphery of which it emerges.

8. Ultrasonic device according to one of the preceding claims, characterized in that the vibrating surface (11) has a network of parallel or crisscross straight grooves (12) or a network of circular and/or radial grooves.

9. Ultrasonic device according to claim 8, characterized in that the grooves have a rectangular cross section.

10. Process for the manufacture of microbeads from thermofusible material according to which the material is introduced into the intermediate chamber/crucible of an ultrasonic device according to one of claims 1 to 8, such that the said material is introduced in the fused state, the microdroplets produced by the device and detached from the vibrating surface falling by gravity whilst cooling to form the said microbeads.

## Patentansprüche

1. Ultraschallvorrichtung zur kontinuierlichen Erzeugung von Mikrotröpfchen, welche eine einheitliche Größe besitzen, umfassend eine vibrierende Oberfläche (11, 61, 105), die durch ihren orthogonalen Ultraschallschwingungszustand ein Material im flüssigen Zustand zerstäubt, welches durch Zufuhrmittel (20, 22, 24; 70, 72; 122, 124, 126, 128, 130) aus dem Inneren der Vorrichtung zugeführt wird, dadurch gekennzeichnet, daß das Material im flüssigen Zustand durch einen ringförmigen Kanal (72, 130) oder mehrere Kanäle (24), von denen eine der Abmessungen des Durchgangsquerschnitts im oder unter dem Millimeterbereich liegt, auf die vibrierende Oberfläche (11, 61, 105) geleitet wird, und zwar entweder aus einer Tiegel-Zwischenkammer (22, 128) zur Durchflußregulierung und/oder Wärmeregulierung oder direkt aus dem ringförmigen Kanal (72), welcher als Tiegel-Zwischenkammer dient, wobei die Zwischenkammer (22, 72, 128) unter der vibrierenden Oberfläche (11, 61, 105) angeordnet ist.

2. Ultraschallvorrichtung nach Anspruch 1, dadurch gekennzeichnet, daß die Zufuhrmittel einen oder mehrere Zufuhrkanäle (20, 70, 126) für das Material im flüssigen Zustand umfassen, wobei sich die Basis der Zwischenkammer (22, 72, 128), wo der oder die Zufuhrkanäle (20, 76, 126) einmünden, in der Ebene eines Wellenknotens des Schwingungszustandes befindet.

3. Ultraschallvorrichtung nach Anspruch 1 oder 2, dadurch gekennzeichnet, daß der Gesamtquerschnitt des Durchgangs des oder der Kanäle (72, 130, 24) größer ist als 8 mm², wobei das Fließen des Materials durch Kapillarität und/oder einen durch den Schwingungsmodus bewirkten Druckgradienten erfolgt.

4. Ultraschallvorrichtung nach einem der vorhergehenden Ansprüche, dadurch gekennzeichnet, daß die Kanäle auf der vibrierenden Oberfläche (11) in einem Winkel zwischen 25 und 75 Grad in bezug auf die Oberfläche münden.

5. Ultraschallvorrichtung nach einem der Ansprüche 1 bis 4, dadurch gekennzeichnet, daß die innere Zwischenkammer (22) zylindrisch und parallel zur vibrierenden Oberfläche (11) ist und daß das Material im flüssigen Zustand durch mehrere Kanäle (24) verteilt wird, die sich in gleichmäßigen Abständen auf derjenigen Linie der Kammer, welche der Oberfläche (11) am nächsten ist, befinden.

6. Ultraschallvorrichtung nach einem der Ansprüche 1 bis 4, dadurch gekennzeichnet, daß die innere Zwischenkammer (72) zentral angeordnet ist und eine röhrenartige Form aufweist, die senkrecht zur vibrierenden Oberfläche (11) ist, in welche sie direkt mit einem ihrer Enden einmündet, das, falls gewünscht, verengt sein kann.

7. Ultraschallvorrichtung nach einem der Ansprüche 1 bis 4, dadurch gekennzeichnet, daß die innere röhrenförmige Zwischenkammer (128) am Umfang der vibrierenden Vorrichtung (100) angeordnet ist, unterhalb der und senkrecht zur vibrierenden Oberfläche (105), welche eine konvexe Form in bezug auf die vibrierende Vorrichtung aufweist und an deren Peripherie sie mündet.

8. Ultraschallvorrichtung nach einem der vorhergehenden Ansprüche, dadurch gekennzeichnet, daß die vibrierende Oberfläche (11) ein Netz von geradlinigen Rillen, die parallel (12) oder schachbrettartig angeordnet sind, oder ein Netz von kreisförmigen und/oder radialen Rillen aufweist.

9. Ultraschallvorrichtung nach Anspruch 8, dadurch gekennzeichnet, daß die Rillen einen rechteckigen Querschnitt aufweisen.

10. Verfahren zur Erzeugung von Mikrokügelchen aus einem wärmeschmelzbaren Material, gemäß dem man das Material in die Tiegel-Zwischenkammer einer Ultraschallvorrichtung nach einem der Ansprüche 1 bis 8 einführt, so daß das Material in den Schmelzzustand gebracht wird, wobei die durch die Vorrichtung erzeugten und von der vibrierenden Oberfläche abgelösten Mikrotröpfchen durch die Schwerkraft herabfallen, wobei sie sich abkühlen und die Mikrokügelchen bilden.
